(19) Europäisches Patentamt

European Patent Office

Office européen des brevets

(11) **EP 1 091 573 A2**

(12) **EUROPÄISCHE PATENTANMELDUNG**

(43) Veröffentlichungstag:
**11.04.2001 Patentblatt 2001/15**

(51) Int. Cl.⁷: **H04N 5/253**

(21) Anmeldenummer: **00203418.9**

(22) Anmeldetag: **03.10.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **08.10.1999 DE 19948873**

(71) Anmelder:
• **Philips Corporate Intellectual Property GmbH**
  **52064 Aachen (DE)**
  Benannte Vertragsstaaten:
  **DE**
• **Koninklijke Philips Electronics N.V.**
  **5621 BA  Eindhoven (NL)**
  Benannte Vertragsstaaten:
  **FR GB**

(72) Erfinder:
• **Poetsch, Dieter, Prof.**
  **52064 Aachen (DE)**
• **Richter, Detlef, Prof. Dr.**
  **52064 Aachen (DE)**
• **Kurreck, Ines-Henrike**
  **52064 Aachen (DE)**

(74) Vertreter:
**Volmer, Georg, Dipl.-Ing. et al**
**Philips Corporate Intellectual Property GmbH,**
**Habsburgerallee 11**
**52064 Aachen (DE)**

(54) **Vorrichtung und Verfahren zur Wiedergabe von Lichttonaufzeichnungen**

(57)     Zur Wiedergabe von Lichttonaufzeichnungen tastet eine opto/elektronische Wandlereinrichtung (1, 2', 2", 11) die Lichttonspuren (3) eines Film (4) ab. Die erzeugten Bilddaten der Lichttonspuren (3) sind einem Framegrabber (14) zur Zwischenspeicherung zugeleitet. Eine Datenverarbeitungseinrichtung (13) verarbeitet programmgesteuert die zwischengespeicherten Bilddaten. Für eine Tonwiedergabe werden die verarbeiteten Bilddaten der Lichttonspuren (3) nachfolgend in digitale Audiodaten und/oder analoge Tonsignale umgewandelt.

FIG. 1

EP 1 091 573 A2

**Beschreibung**

Die Erfindung betrifft eine Vorrichtung zur Wiedergabe von Lichttonaufzeichnungen für einen Filmabtaster mit einer opto/elektronischen Wandlereinrichtung zur Abtastung von auf Film aufgezeichneten Lichttonspuren, welche an einem Ausgang ein Bildsignal ausgibt. Ferner betrifft die Erfindung ein Verfahren zur Wiedergabe von Lichttonaufzeichnungen.

Bei 35-mm-Kinofilmen zeichnet man Toninformationen auf Lichttonspuren auf, die zwischen Bildinformationen und seitlichen Perforationslöchern liegen. Zur Wiedergabe der Toninformationen transportiert man den Film mit einer Geschwindigkeit von 24 Bildern pro Sekunde. Während des Filmtransports richtet man auf die Lichttonspuren einen Lichtstrahl. Der Lichtstrahl wird durch Transparenzunterschiede auf den Lichttonspuren moduliert und auf einen lichtempfindlichen Sensor gelenkt. Für eine Lautsprecherwiedergabe verstärkt man das von dem lichtempfindlichen Sensor abgegebene analoge Tonsignal.

Es gibt unterschiedliche Lichttonspuren. Bei der sogenannten Sprossenschrift ist die Transparenz der Lichttonspur proportional zur aufgezeichneten Modulationsamplitude; bei der sogenannten Einzackenschrift ist es die Breite der klaren Fläche. Zur Reduzierung von Verzerrungen hat man eine einfache Doppelzacken- und zweifache Doppelzacken-Spuren eingeführt, die einander benachbart sind und die gleiche Modulationsinformationen tragen. Für eine stereophone Tonwiedergabe verwendet man doppelte zweiseitige Lichttonspuren.

Ältere, häufig verwendete Filme zeigen oft zwei Fehlerarten: Zum einen handelt es sich dabei um Schmutz und Staub auf der Oberfläche des Films, zum anderen um Kratzer in Laufrichtung des Filmes, sogenannte Laufschrammen, die verursacht werden durch mechanischen Kontakt der Filmführungselemente mit der Filmoberfläche. Lichttonspuren sind besonders empfindlich gegen Störungen durch Schmutz und Kratzer, deren Anzahl mit der Anzahl von Malen steigt, die die Kopie projiziert wird. Verzerrungen von Zischlauten der Sprache, ein sogenannter Donnereffekt, können durch Streufichteffekte der Zackenschrift entstehen. Nichtlineare Verzerrungen können bei der Sprossenschrift durch eine nichtlineare Schwärzung entstehen, die z.B. bei der Abtastung von Tonnegativen vorliegt. Durch die relativ große Apertur der Spaltblende ist der Frequenzgang auf ca. 8 kHz begrenzt.

Zur Restaurierung von alten Kinofilmen wird heute der Bildteil auf einen neuen Filmträger kopiert und die Lichttonspur einspurig auf einen Magnetfilm übertragen, um zu verhindern, dass durch optisches Kopieren der Lichttonspuren die oft verschrammten und teilweise durch Schmutz gestörten Tonspuren auf den neuen Filmträger übertragen werden. Ferner wird durch Tonnachbearbeitung mit elektronischen Filtern und manueller Bearbeitung versucht, Knack- und Prasselgeräusche aus dem Orginalton zu entfernen.

In der DE 197 29 201 A1 ist bereits ein Filmabtaster mit einer Einrichtung zur Abtastung von Lichttonspuren auf einem bandförmigen Träger beschrieben, bei welchem die Toninformation senkrecht zur Bewegungsrichtung des Trägers mit einer opto/elektronischen Wandlereinrichtung abgetastet wird. Die opto/elektronische Wandlereinrichtung tastet die Toninformation zeilenweise ab, um Abtastwerte für eine digitale zweidimensionale Filterung zu erzeugen. Die Lichttonspuren können dabei mit einem CCD-Zeilensensor abgetastet werden oder mit einem quer über die Tonspuren gelenkten Lichtfleck zur Steuerung eines Fotosensors.

Der vorliegenden Erfindung liegt die Aufgabe zugrunde, eine Vorrichtung und ein Verfahren zur Wiedergabe von Lichttonaufzeichnungen nach der eingangs Art zu schaffen, welche(s) die Beseitigung von Störungen ermöglicht.

Diese Aufgabe wird gelöst durch eine Einrichtung zur Signalaufbereitung, welche an einem Eingang das Bildsignal vom Ausgang der opto/elektronische Wandlereinrichtung empfängt und als Bilddaten zwischenspeichert, eine Datenverarbeitungseinrichtung zur programmgesteuerten Verarbeitung der zwischengespeicherten Bilddaten, und eine Einrichtung zur Umwandlung verarbeiteter Bilddaten in Audiodaten für die Wiedergabe der auf den Lichttonspuren aufgezeichneten Toninformation.

Die Erfindung weist den Vorteil auf, dass das durch Abtasten der Lichttonspuren erzeugte Signal nicht mehr - wie bisher üblich — als analoges Tonsignal bearbeitet wird, sondern als Bildsignal. Die Datenwerte eines Abbildes der abgetasteten Lichttonspuren werden zunächst zwischengespeichert und in einem Bildbearbeitungsprozess programmgesteuert aufbereitet, bevor die Bilddatenwerte in Audiodatenwerte umgewandelt werden und dann ein Tonsignal zur Wiedergabe der Lichttoninformation erzeugt wird.

Bei einer Ausgestaltung der Erfindung ist vorgesehen, dass der Film von einer Filmtransporteinrichtung in Längsrichtung transportierbar und im Bereich der Lichttonspuren von einem Bildsensor, insbesondere einem CCD-Zeilensensor, quer zur Längsrichtung des Films abtastbar ist. In einem Filmabtaster, der bereits für kontinuierlichen Filmtransport und zur zeilenweisen Abtastung von Filmbilder eingerichtet ist, lässt sich eine getrennt zur Bildabtastung betriebene CCD-Zeilenkamera für die Abtastung der Lichttonspuren sehr einfach in der Lage, Drehung und Fokussierung einstellen. Ein vorhandenes Beleuchtungssystem für die Bildabtastung lässt sich vorteilhaft auch für die CCD-Zeilenkamera der Lichttonspuren einsetzen.

Bei einer anderen Ausgestaltung ist vorgesehen, dass die Datenverarbeitungseinrichtung durch ein Programm so steuerbar ist, dass die Abtastrate der opto/elektronischen Wandlereinrichtung mit der von der Filmtransporteinrichtung bestimmten Filmtransportgeschwindigkeit zeitlich verkoppelbar ist. Durch die zeitliche Verkopplung bleibt bei unterschiedlichen Filmtransportgeschwindigkeiten nicht nur die Zahl der Zeilen pro Filmbild gleicht, sondern auch die Datenmenge pro Filmbild.

Außerdem lassen sich durch diese Maßnahme unterschiedliche Filmgeschwindigkeiten wählen. So können zur Anpassung an die maximale Datenrate der opto/elektronischen Wandlereinrichtung neben der Abtastung in Echtzeit mit 24 Bildern pro Sekunde auch Geschwindigkeiten von 12 und 6 Bildern pro Sekunde eingestellt werden. Derart geringe Datenraten können gewünscht sein, wenn man langsame und damit preiswerte opto/elektronischen Wandlereinrichtungen einsetzen möchte.
Verkoppelt man darüber hinaus die Abtastrate für das Tonsignal mit der Zeilenfrequenz der opto/elektronischen Wandlereinrichtung, so erhält man weitere Vorteile. Bei einer Abtastung von beispielsweise 2000 Zeilen pro Filmbild können als Bildrahmen für die Lichttonspuren 2000 Zeilen mit jeweils 512 Pixeln festgelegt werden. Mit einer Film von 6 Bildern pro Sekunde kommt man auf eine Zeilenfrequenz von 12 kHz. Durch eine spätere Umwandlung der Bilddaten in Audiodaten erreicht man für 24 Bilder pro Sekunde eine Zeilenfolge von 48 kHz, d.h. eine Zeile entspricht einem Audioabtastwert nach dem AES/EBU-Standard. Bei dieser Festlegung können vorteilhaft aufwendige Interpolationsfilter zur Umsetzung auf Abtastfrequenzen nach dem AES/EBU-Standard entfallen.

Verkoppelt man ferner die Taktfrequenz für den Filmtransportservo eines Filmabtasters mit der Zeilenfrequenz der opto/elektronischen Wandlereinrichtung, beispielsweise die Horizontalfrequenz einer CCD-Kamera, erzielt man ein driftfreie Verkopplung von Ton- und Bildinformation, so dass nach der programmgesteuerten Bearbeitung von Datenwerten der Lichttonspuren eine synchrongenaue Zusammenführung von Bild und Ton möglich ist.

Gemäß einer Weiterbildung der Erfindung ist vorgesehen, dass die durch Abtasten der Lichttonspuren erzeugten Bilddaten in einem RAW-Dateiformat in den Speicher schreibbar sind, dass die Bilddaten des RAW-Dateiformats programmgesteuert aus dem Speicher lesbar und über ein Bussystem einer CPU zuführbar sind, dass die CPU von empfangenen Bilddaten des RAW-Dateiformats durch programmgesteuerte Bildverarbeitung ein Datensignal in einem WAV-Dateiformat ableitet und dass von dem Datensignal des WAV-Dateiformats ein Audiosignal zur Wiedergabe der auf den Lichttonspuren aufgezeichneten Toninformationen erzeugbar ist.

In einer bevorzugten Ausführungsform ist die CPU durch ein Programm so steuerbar, dass eine Fehleranalyse zur Detektion von Fehlstellen im Bereich der Lichttonspuren Anhand von abgeleiteten Bilddaten der Lichttonspuren durchführbar und detektierte Fehlstellen fehlerverdeckbar sind. Dabei werden die durch Abtasten erzeugten Datenwerte der Lichttonspuren zunächst als Datenwerte von Bildinhalt behandelt. Die Datenwerte der als Bildinhalt betrachteten Lichttonspuren werden mit aus der Bildbearbeitung bekannten Mitteln untersucht, um Fehlstellen im Film zu ermitteln, die durch Kratzer und/oder Schmutz verursacht sein könnten. Ein Verfahren und eine Schaltungen zum Erkennen und Verdecken von Kratzern und/oder Schmutz auf Film ist beispielsweise aus der DE 44 32 787 A1 bekannt.

Komplexe Datenformate mit Header-Erzeugung fuhren zu einer geringen Transfer-Datenrate. Bei einer vorteilhaften Ausführungsform der Erfindung ist ein Programm zur Steuerung der programmgesteuerten Datenverarbeitungseinrichtung so gestaltet, dass die Bilddaten in einem RAW-Dateiformat zwischengespeichert werden, bevor sie einer Filterung unterworfen werden. Das RAW-Dateiformat stellt eine einfache Anordnung der Pixel ohne Kompressionsverfahren dar und kann Dateien beliebiger Länge erzeugen. In dem RAW-Dateiformat benötigt man für ein „Tonbild" mit 512 Pixel horizontal und 2000 Zeilen vertikal bei einer Quantisierung von 8 Bit eine Speicherkapazität von 1 MByte. Bei einer Filmtransportgeschwindigkeit von 24 Bilder pro Sekunde sind für die Dauer einer Sekunde 24 MByte an Daten zu erzeugen.

Die zur Abtastung der Lichttonspuren eingesetzten CCD-Sensoren sind produktionsbedingt unterschiedlich empfindlich. In dem Abtastsignal entsteht eine Störstruktur, die als Fixed Pattern Noise (FPN) bezeichnet wird. FPN kann auch durch eine ungleichmäßige Beleuchtung des Film entstehen.

Bei einer vorreilhaften Ausgestaltung der Erfindung ist ein Mittel zur Korrektur von Fixed-Pattern-Noise-Fehlern vorgesehen, bei welchem die ohne Abtastung von Film erzeugten Bilddaten einer bestimmte Anzahl von Zeilen zeilenweise in ein Feld geschrieben werden, dann spaltenweise aus dem Feld gelesen und einer multiplikativen Korrektur gemäß der Funktion $g_{neu}(x) = (g_{FPN} / g_{FPN}(x)) * g_{alt}(x)$ unterworfen werden.

Es wird eine eindimensionale horizontale FPN-Korrektur im Ortsbereich durchgeführt. Die Korrektur erfolgt durch Division und Skalierung der Lichttonspur-Bildpunkte mit zugehörigen Bildpunkten, die vor einer Lichttonspurabtastung programmgesteuert erzeugt wurden, indem bei offenem Filmbildfenster von Daten einer Vielzahl von Zeilen, beispielsweise 2048 Zeilen mit jeweils 512 Bildpunkten, durch arithmetische Mittlung die Grauwerte in Spaltenrichtung berechnet werden und als FPN-Bild zusammen mit der zugehörigen Bilddatei zwischengespeichert wird.

Störungen können auch auf schlechte Ausleuchtung bei der Filmaufnahme oder Kopierfehler zurückzuführen sein. Solche Störungen werden als Shading-Fehler bezeichnet. Shading-Fehler treten häufig am linken und rechten Rand der Lichttonspuren auf. Es kann dabei sein, dass Teile des Films unterschiedliche lokale Shading-Fehler aufweisen.

Gemäß einer vorteilhaften Weiterbildung der Erfindung ist ein Mittel zur Korrektur von Shading-Fehlern vorgesehen ist, welches von Fixed-Pattern-Noise-korrigierten Bilddaten der Lichttonspuren eine Ausgleichskurve gemäß der Polynomfunktion

$$g(x) = \sum_{i=0}^{i=6} a_i \, x^i$$

erzeugt, welche die durch Abtastung der Lichttonspuren erzeugten Bilddaten multiplikativ beeinflusst. Vorteilhaft werden dabei Randbereiche der Lichttonspuren, die keine Toninformation enthalten, ausgeblendet.

Kopierfehler oder Streulicht können am Rand von Lichttonspuren in Sprossenschrift oft Fehler verursachen, die in der Filmperforation und/oder dem Filmbildstrich begründet sind. Diese Fehler sind durch Störfrequenzen von 24 Hz und deren Oberwellen gekennzeichnet. Im Gegensatz zu konventionellen Tonrestaurierungsverfahren, die steile Kerbfilter zur Ausfilterung der 24-Hz-Anteile einsetzen, entstehen bei der erfindungsgemäßen Lichttonspurbearbeitung der keine störenden Artefakte.

Gemäß einer vorteilhaften Ausgestaltung der Erfindung ist vorgesehen, dass die CPU durch ein Programm so steuerbar ist, dass Fehler in Bilddaten von Lichttonspuren, die in Sprossenschrift aufgezeichnet sind, nach einem Grauwerthistogramm detektierbar sind.

Die auf einem Film chemisch gespeicherte Bildinformationen werden in der Regel parallel von einer Time-Code-Information begleitet, um bestimmte Bilder auf dem Film zu lokalisieren. In einer Ausgestaltung der Erfindung ist vorgesehen, dass auch für die auf den Lichttonspuren befindlichen Toninformationen eine Time-Code-Information erzeugt wird. Dieses geschieht erfindungsgemäß mit einem Mittel zur Erzeugung eines Timecode-Signals, welches von RAW-Daten und/oder WAV-Daten und/oder Daten der Filmtransporteinrichtung des Filmabtasters ableitet.

Gemäß einer weiteren Ausgestaltung der Erfindung ist vorgesehen, dass die Position der opto/elektronischen Wandlereinrichtung zur zeilenweisen Abtastung der auf Film aufgezeichneten Lichttonspuren unabhängig von der Position einer opto/elektronischen Wandlereinrichtung zur Abtastung der auf dem Film aufgezeichneten Bildern einstellbar ist. Dadurch läßt sich die Position einer opto/elektronischen Wandlereinrichtung für die Lichttonspuren in bezug auf die Lage der auf Film aufgezeichneten Lichttonspuren sehr genau justieren. Zur Kontrolle der Einstellungen von Lichtquelle und Zeilensensor 11 ist es vorteilhaft, die Lichttonspur als Bild auf einem Bildmonitor wiederzugeben und/oder die durch Abtasten der Lichttonspuren erzeugten Tonsignale auf dem Sichtschirm eines Oszilloskops darzustellen und/oder die von den Lichttonspuren abgeleiteten Tonsignale abzuhören. Dem Oszilloskop wird vorteilhafterweise ein analoges Bildsignal des Zeilensensors 11 zugeführt. Auf dem Schirm des Oszilloskops können Einstellungen für den Lichtstrom, die Fokussierung, die horizontale Lage des CCD-Zeilensensors zur Lichttonspur oder auch die Spurneigung (Azimuth) bei symmetrischem Spurbild für eine Zeile geprüft werden.

Im Gegensatz zur bisher üblichen Lichttonabtastung erfolgt die Lichttonabtastung nach der vorliegenden Erfindung „transformatorlos". Von den Lichttonspuren können Tonsignale abgeleitet werden, die Frequenzen im Bereich von 0 bis 70 Hz umfassen. Zur Einhaltung des Standards sind diese niederfrequenten Signalanteile durch Hochpassfilterung zu unterdrücken. Entsprechend sollte für Tonaufnahmen nach dem sogenannten Acadamy-Frequenzgang der Bereich oberhalb von 10 kHz durch Tiefpassfilterung unterdrückt werden. Eventuelle Spaltverluste des CCD-Zeilensensors lassen sich nach einer sin(x)/x-Funktion ausgleichen.

Die Auswirkungen von Filmschrammen und —Kratzern auf den Lichttonspuren eines Film lassen sich durch die Verwendung einer opto/elektronischen Wandlereinrichtung mit diffuser Beleuchtungseinrichtung verringern. Eine andere vorteilhafte Lösung besteht darin, eine opto/elektronische Wandlereinrichtung mit einer Vorrichtung zur Nassabtastung des Films zu verwenden.

Bei einer vorteilhaften Weiterbildung der Erfindung ist vorgesehen, dass Werte von fehlerhaften Bilddaten der abgetasteten Lichttonspuren durch Mittelwerte von örtlich und/oder zeitlich benachbarten fehlerfreien Bilddaten ersetzt werden. Zur Fehlerverdeckung von größeren Fehler-Clustern in Zeilenrichtung ist es vorteilhaft, dass die Werte mehrerer, in Zeilenrichtung aufeinanderfolgender fehlerhafter Bilddaten durch einen Mittelwert ersetzt werden, welcher dem mittleren Grauwert aufeinander folgender Zeilen entspricht.

Zur Verringerung von Rauschanteilen und Intermodulationsprodukten in Audiosignalen bei der Wiedergabe von Lichttonaufzeichnungen in Sprossenschrift wird nach einer Weiterbildung der Erfindung vorgeschlagen, dass der Rauschanteil von Filmkorn durch eine Fast-Fourier-Analyse der Bilddaten in Zeilenrichtung gemessen wird, und dass der gemessene Rauschanteil im Sinne einer Rauschreduzierung mit den Bilddaten in Spaltenrichtung multipliziert wird.

Zur Vereinfachung und Erhöhung der Wirksamkeit der Korrekturmaßnahmen ist es vorteilhaft, dass die Bilddaten der abgetasteten Lichttonspuren in folgender Reihenfolge einer Bildverarbeitung unterworfen werden:

    a) Durchführung einer Fixed-Pattern-Noise-Korrektur,
    b) Durchführung einer globalen Vorfilterung, insbesondere einer planaren Tiefpassfilterung,
    c) Abtrennen von Bilddaten an Randbereichen der Lichttonspuren (3),

d) Korrektur von Shading-Fehlern,

e) Durchführung einer lokalen Fehlerbehandlung und

f) Durchführung einer globalen Nachfilterung.

Die Erfindung wird nun anhand von in den Zeichnungen dargestellten Ausführungsbeispielen näher beschrieben und erläutert. Es zeigen:

Fig. 1 eine Abtasteinrichtung für Lichttonspuren und ein Blockschaltbild zur Verarbeitung von Bilddaten abgetasteter Lichttonspuren gemäß der Erfindung,

Fig. 2 ein Stück Filmstreifen eines 35-mm-Kinofilms,

Fig. 3 eine Lichttonspur in Sprossenschrift mit Kratzern in Filmlaufrichtung,

Fig. 4 die Prinzipdarstellung einer Dateistruktur zur Berechnung von Fixed Pattern Noise und

Fig. 5 die Darstellung des Grauwertverlaufs einer Abtastzeile.

Gleiche Teile sind in der Figuren mit gleichen Bezugszeichen versehen.

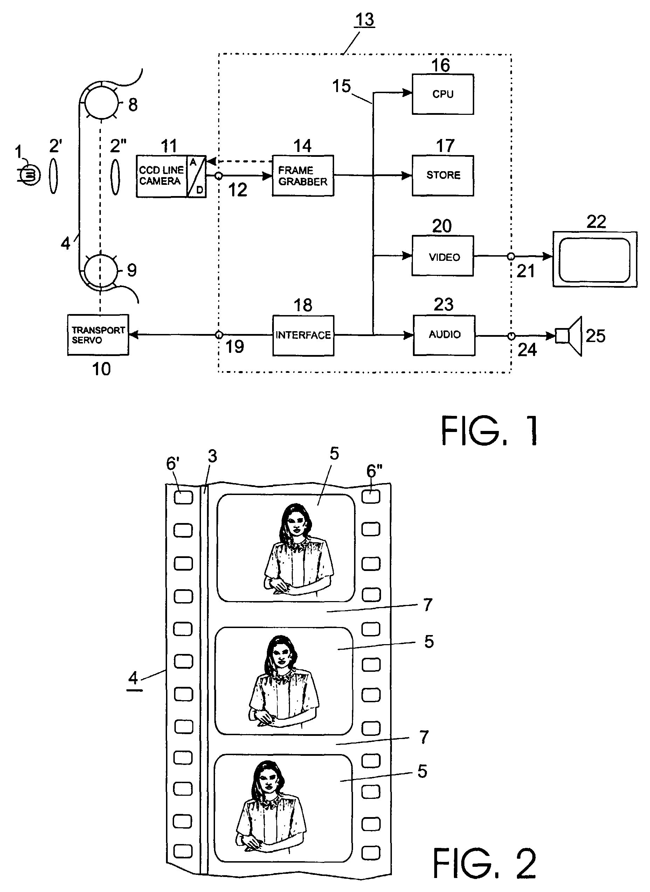

In der Fig. 1 bezeichnet 1 eine Beleuchtungsquelle. Das Licht der Beleuchtungsquelle 1 ist über eine Kondensoroptik 2' und 2" auf Lichttonspuren 3 eines Films 4 gerichtet.

Die Fig. 2 zeigt die Position der Lichttonspuren 3 auf dem Film 4. Bei einem 35-mm-Kinofilm haben die Lichttonspuren 3 eine Spurbreite von 2,5 mm; sie liegen auf einer Seite zwischen 22 mm breiten Filmbildfenstern 5 und einer ersten Perforationsspur 6'. Eine zweite Perforationsspur 6" verläuft auf der anderen Seite der Filmbildfenster 5. Die Perforationsspuren 6' und 6" dienen zum Filmtransport. Die Bildhöhe beträgt bei einem 35-mm-Kinofilm 16 mm; der Bildstand weist 19 mm auf. Der Raum zwischen den Filmbildfenstern 5 bezeichnet man als Bildstrich 7.

Zum Filmtransport greifen zwei Zahnrollen 8 und 9 in Perforationslöcher der seitlich des Films 4 verlaufenden Perforationsspuren 6' und 6". Die Zahnrollen 8 und 9 stehen in Wirkverbindung mit Motoren (nicht dargestellt), deren Drehzahl von einem Filmtransportservo 10 geregelt wird. Die Transportgeschwindigkeit eines 35-mm-Kinofilms beträgt 24 Bilder pro Sekunde (= 45,6 cm/s).

Auf der gegenüberliegenden Seite des Films 4 befindet sich eine Zeilenkamera 11 zum Empfang des durch die Lichttonspuren 3 modulierten Lichtes. Die Zeilenkamera 11 enthält einen CCD-Zeilensensor mit 512 Bildsensoren. Die Zeilenkamera 11 gibt ein RS-422-Datensignal in einer Wortbreite von 8 Bit pro Pixel ab. Das RS-422-Datensignal der Lichttonspuren 3 gelangt über einen Dateneingang 12 zu einer programmgesteuerten Datenverarbeitungseinrichtung 13.

Die Datenverarbeitungseinrichtung 13 enthält einen Framegrabber 14, dessen Eingang mit dem Dateneingang 12 der Datenverarbeitungseinrichtung 13 verbunden ist. Ein Ausgang des Framegrabbers 14 ist an einem Bussystem 15 angeschlossen. An dem Bussystem 15 sind ferner angeschlossen: eine CPU 16, ein Speicher 17 zur Programm- und Datenspeicherung, ein Interface 18 mit einer Klemme 19 zur Übertragung von Servodaten von und zu dem Filmtransportservo 10, eine Videoausgabeeinrichtung 20 mit einer Ausgangsklemme 21 zur Übertragung eines Videosignals zu einem Monitor 22 und eine Audioausgabeeinrichtung 23 mit einer Ausgangsklemme 24 zur Übertragung eines Audiosignals zu einem Lautsprecher 25.

Der Framegrabber 14 bereitet die von der Zeilenkamera 11 erzeugte serielle Bilddatenfolge der Lichttonspuren 3 auf, speichert sie zwischen und leitet sie in einer Auflösung von 8 Bit über das Bussystem 15 zu einem Speicher 17 weiter, in welchem die Bilddaten in einem RAW-Dateiformat gespeichert werden. Der Framegrabber 14 weist einen Ausgang (gestrichelt gezeichnet) zur Synchronisierung der Zeilenkamera 11 auf. Zur Begrenzung der Datenübertragungsrate kann die Abtastfrequenz von 24 Bildern pro Sekunde auf 6 Bilder reduziert werden. Tastet man die Lichttonspuren 3 mit 2000 Zeilen pro Filmbild ab, erhält man mit einer auf 6 Bilder reduzierten Filmtransportgeschwindigkeit eine Nyquistfrequenz von 24 kHz. In diesem Fall ist für eine Sekunde digitalisierten Filmtons eine Datenmenge von 24 MByte in dem Speicher 17 zu speichern.

Die vom Framegrabber 14 erzeugten Filmtonbilddaten werden aufgrund der großen Datenmenge vorzugsweise in einen Plattenspeiher des Speichers 17 geschrieben. Anwendungsprogramme zur Bearbeitung der Daten der Lichttonspuren sowie zur Regelung des Filmtransports werden in RAM- und ROM-Speichern des Speichers 17 gespeichert.

Um während der Lichttonspurabtastung die Einstellung der Lichtquelle 1 und der Zeilenkamera 11 sowie die Toninformation durch Bilddarstellung zu kontrollieren, ist die Videoausgabeeinrichtung 20 vorgesehen, welche die digitalen Bilddaten der Zeilenkamera 11 in ein analoges Videosignal zur Darstellung auf dem Monitor 22 umwandelt.

Zur Bildkontrolle der Lichttonspuren kann ein analoges Videosignal auch direkt vom Ausgang der Zeilenkamera 11 abgegriffen und dem Monitor 22 zugeleitet werden. Selbstverständlich ist es auch möglich, das analoge Videosignal dem Eingang eines Oszilloskops (nicht dargestellt) zuzuführen, um Einstellungen des Lichtstroms für maximale Signalpegel je nach Filmdichte oder die Fokussierung und Lage der Zeilenkamera 11 zu den Lichttonspuren 3 zu prüfen.

Die Audioausgabeeinrichtung 23 ist zur Abhörkontrolle vorgesehen. In der Audioausgabeeinrichtung 23 erfolgt eine Zeittransformation der abgetasteten Daten. Die Daten werden in eine Audiodatei, z.B. eine WAV-Datei umgewandelt. Bei verlangsamter Abtastung ist eine Transformation durch Zeitkompression durchzuführen, damit die Audioinformation in Echtzeitlänge über den Lautsprecher 25 wiedergegebenen werden kann. Bei der Zeitkompression entstehen periodische Lücken in der Wiedergabe. Der Vorteil ist, dass bei verlangsamter Abtastung eine echte ‚Hinterbandkontrolle' der auf den Lichttonspuren aufgezeichneten Toninformationen möglich ist. Selbstverständlich ist es auch möglich, anstelle analoger Audiosignale digitale Audiosignal für eine Wiedergabe der Toninformationen der abgetasteten Lichttonspuren wiederzugeben. In diesem Fall entfällt in der Audioausgabevorrichtung 23 eine D/A-Wandlung der verarbeiteten Bilddaten der Lichttonspuren.

Zur Verkopplung der Zeilenfrequenz der Zeilenkamera 11 mit der Transportgeschwindigkeit des Films 4 wird der Filmtransportservo 10 zur Steuerung der Motoren für die Zahnrollen 8 und 9 durch Daten geregelt, welche die Datenverarbeitungseinrichtung 13 programmgesteuert anhand der Datenrate der von der Zeilenkamera 11 eintreffenden Daten erzeugt. Das Interface 18 ist für eine bidirektionale Übertragung von Daten zwischen dem Filmtransportservo 10 und Bussystem 15 ausgelegt, so dass ein Austausch von Soll- und Ist-Datenwerten der Drehzahlen der Zahnrollen 8 und 9 möglich ist.

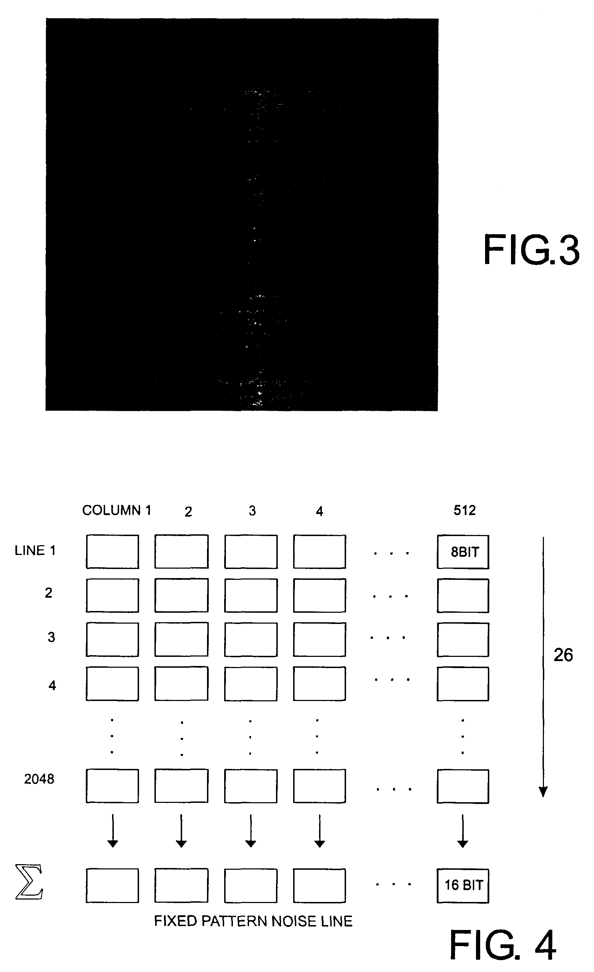

Die Fig. 3 zeigt den Bildausschnitt einer Lichttonspur in Sprossenschrift, die sehr zerkratzt und verschmutzt ist. Die quer zur Längsrichtung des Film aufgezeichnete Sprossenschrift entsteht durch Modulation der Belichtungsintensität bei der Aufzeichnung. Das Streifenmuster mit verschiedenen Transparenzen verläuft proportional zur Toninformation. Durch wiederholtes Kopieren des Films auf neue Filmträger kommt es bei ungenauer Positionierung des Films und/oder der optischen Kopiereinrichtung zu einem Shading der homogenen Grauwerte. Ferner verursachen Staubpartikel auf dem Filmnegativ oder Filmpositiv beim Kopieren dunkle oder hellen Flecken auf den Lichttonspuren 3. Außerdem kann es beim wiederholten Abspielen des Films zu mechanischen Beschädigungen in Filmlaufrichtung kommen; Filme können auch reißen. Die Tonspuren von geklebten Filmen werden durch sogenannte Tonfliegen in Form eines Dreiecks überdeckt, so dass Tonstörungen entstehen. Während eines Kopiervorgangs kann einfallendes Licht an Stellen der Perforation oder des Filmbildes periodische Helligkeitsschwankungen erzeugen, die sich in einem 24-Hz- bzw. 96-Hz-Brumm in der wiedergegebenen Lichttoninformation äußern.

Für eine Filmtonrestaurierung hat es sich als vorteilhaft erwiesen, zunächst von den Bilddaten der Lichttonspuren 3, welche im Speicher 17 als RAW-Signal zwischengespeichert sind, eine Fixed-Pattern-Noise-(FPN)-Korrektur durchzuführen, um zum einen die unterschiedliche Sensitivität der Pixel der Zeilenkamera 11 auszugleichen und zum anderen die Genauigkeit zu erhöhen und das Rauschen zu verringern. Dazu wird ohne eingelegtem Film von Bilddaten des von der Zeilenkamera 11 abgegebenen Signals eine FPN-Datei angelegt.

In der Fig. 4 ist die Struktur einer solchen FPN-Datei dargestellt. Die FPN-Datei ist feldförmig angelegt; sie enthält in der dargestellten Ausführung 2048 Zeilen mit jeweils 512 Spalten. In einem solchen Datenfeld werden 8 Bit breite Bilddaten der Lichttonspuren 3 gespeichert. Für jede der 512 Spalten wird über 2048 Zeilen der arithmetische Mittelwert in Filmlaufrichtung 26 ermittelt. Die Datenworte der Mittelwerte werden anschließend in einer Breite von 16 Bit gespeichert. Die untere Zeile der FPN-Datei enthält somit pro Spalte den für die CCD-Pixel auf dem Sensor der Zeilenkamera 11 gültigen Datenwert für den Farbton Weiß.

Die FPN-Korrektur wird anschließend bei eingelegtem Film so durchgeführt, dass die durch die Lichttonspurabtastung erzeugten Grauwerte der Bilddaten, die unterhalb des ermittelten Mittelwertes liegen, im Sinne einer Korrektur in der Helligkeit angehoben werden, bzw. solche Grauwerte, die oberhalb des Mittelwertes liegen, in der Helligkeit abgesenkt werden. Die FPN-Korrektur wirkt multiplikativ; es kommt eine multiplikativen Mittelung gemäß der Funktion $g_{neu}(x) = (g_{FPN} / g_{FPN}(x)) * g_{alt}(x)$ zur Anwendung.

Die einzelnen Mittelwerte werden programmgesteuert von der CPU 16 berechnet. Ein entsprechendes Datenverarbeitungsprogramm zur Steuerung der CPU 16 ist in dem Speicher 17 gespeichert.

Im Anschluss an die FPN-Korrektur wird eine Korrektur von Shading-Fehlern durchgeführt. Shading-Fehler entstehen durch schlechte Ausleuchtung bei der Aufnahme sowohl am linken als auch am rechten Rand von Lichttonspuren 3. Das Shading wird vorteilhaft repräsentativ für den gesamten Film ermittelt. Versuche haben ergeben, dass es ausreichend ist, einen Film in drei Bereiche zu unterteilen. Es wird das Shading eines Films jeweils über ein Lichttonspursegment von 20.000 Zeilen am Filmanfang, in Filmmitte und am Filmende festgestellt.

Vor der Ermittlung des Shading-Fehlers sind Randbereiche der Lichttonspuren, die keine Toninformation enthalten, auszublenden, da fehlerhafte Randbereiche der Lichttonspuren das Ergebnis verfälschen können. Ferner sind Störungen auszublenden, die in Filmlaufrichtung auftreten. Bei der Ermittlung des Shading-Fehlers ist der mittlere Grauwert einer Zeile zu bestimmen. Erfindungsgemäß wird das Shading-Profil durch ein Polynom 3. Grades angenähert. Eine Ausgleichskurve zur Korrektur der Shading-Fehler genügt der allgemeinen Funktion $f(x) = y = a * x^3 + b * x^2 + c*x + d$ bzw. der zur Programmierung geeigneteren Polynomfunktion

$$g(x) = \sum_{i=0}^{i=6} a_i x^i$$

Durch die Mittelung des Shadings über viele Zeilen und die Modellierung des Shadings mit einem Polynom niedrigen Grades werden lokale Bildfehler in den Lichttonspuren nicht nachgebildet. Außerdem lässt sich mit einem Polynom niedrigen Grades der Rechenaufwand begrenzen. Die Korrektur der Shading-Fehlern geschieht durch zeilenweises Multiplizieren von Werten der Bilddaten der Lichttonspuren mit Werten der ermittelten Ausgleichskurve. Mit der Korrektur des Film-Shadings rekonstruiert man eine weitgehend homogene Grauwertverteilung innerhalb der Zeile.

Nach der FPN- und Shading-Korrektur bestimmt man anhand eines Grauwerthistogramms einen Schwellwert. Pixel der Lichttonspuren 3, deren Datenwerte unterhalb des bestimmten Schwellwertes liegen, werden als fehlerhaft definiert.

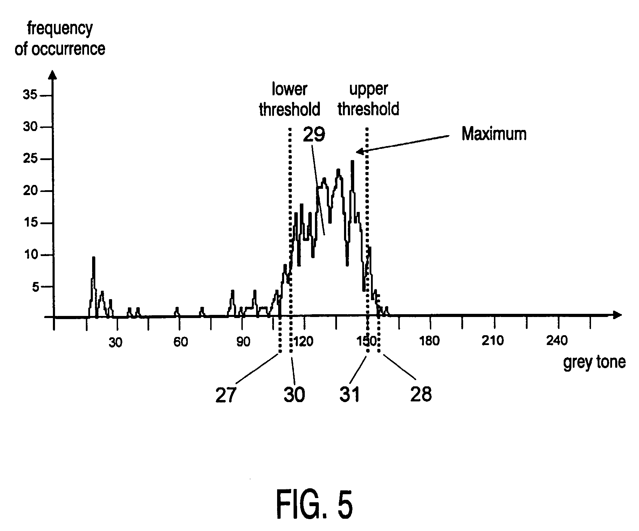

In der Fig. 5 ist ein Grauwerthistogramm nach erfolgter FPN- und Shading-Korrektur dargestellt. Das Histogramm zeigt die Grauwertverteilung einer Zeile, wobei auf der Ordinate die Häufigkeit und auf der Abzisse der Grauwest der Pixel aufgetragen ist. Von einem solchen zeilenweisen Grauwerthistogramm ausgehend wird der Grauwert mit der größten Häufigkeit ermittelt. Dazu werden zwei Nullstellen 27 und 28 gesucht, die einen Grauwertverlauf 29, d.h. einen Grauwertberg, links und rechts eingrenzen. Die gefundenen Nullstellen 27 und 28 werden nachfolgend um einen wählbaren Betrag, z.B. 5 %, in Richtung des Grauwertes mit der maximalen Häufigkeit verschoben. Die so erhaltenen Nullstellen 30 und 31 bilden zwei Schwellwertgrenzen. Pixel mit einem Grauwert zwischen diesen beiden Schwellwertgrenzen können als fehlerfreie Pixel innerhalb einer Abtastzeile von Lichttonspuren 3 angesehen werden.

Die Grauwerte von erkannten fehlerhaften Pixeln werden durch den Mittelwert der für richtig erkannten Grauwerte ersetzt. Wird in einer Abtastzeile der Lichttonspuren 3 kein fehlerfreies Pixel erkannt, wird die gesamte Abtastzeile durch die vorhergehende Abtastzeile ersetzt. Ist die Differenz zwischen den mittleren Grauwerten zweier Abtastzeilen größer als ein bestimmter vorgegebener Wert, dann werden diese zwei Abtastzeilen pixelweise in Filmlaufrichtung gemittelt. Die berechneten Mittelwerte ersetzen die Werte der Datenworte der zuletzt abgetasteten Zeile.

Die restaurierten Bilddaten der Lichttonspuren (3) werden schließlich vom RAW-Dateiformat in ein WAV-Dateiformat konvertiert und in diesem Datenformat der Audioausgabeeinrichtung 23 (Fig. 1) zugeführt. Die Audioausgabeeinrichtung 23 wandelt die Daten der WAV-Datei in analoge Audioinformationen um und gibt sie als analoge Audiosignale zur Wiedergabe durch einen Lautsprecher 25 an der Ausgangsklemme 24 aus. Sollen die verarbeiteten Bilddaten als Audiodaten in nachfolgenden Geräten digital weiterverarbeitet werden, genügt eine Umwandlung der Bilddaten in entsprechende Audiodaten. In diesem Fall kann in der Audioausgabeeinrichtung 23 eine D/A-Wandlung entfallen und das digitale Audiosignal in einem WAV-Dateiformat direkt ausgegeben werden.

Damit die restaurierten Lichttoninformationen lippensynchron zu den Filmbildern wiedergegeben werden können, wird von Daten der WAV-Datei ein Timecodesignal abgeleitet. Wie eingangs dargelegt, werden in dem vorliegenden Ausführungsbeispiel die Lichttonspuren (3) mit jeweils 2048 Zeilen á 512 Pixel pro Filmbild abgetastet. Bei einer Filmtransportgeschwindigkeit von 6 Bildern pro Sekunde kommt man auf eine Taktrate von 48000 Audioabtastwerten pro Sekunde. Ausgehend von dieser Audiowort-Taktrate lässt sich ein AES/EBU-Timecodesignal erzeugen, dass zur Synchronisierung paralleler Bildinformation herangezogen werden kann.

Die durch langsame Abtastung erzeugten, nachfolgend mit verschiedenen digitalen Filtern bearbeiteten Bilddaten der Lichttonspuren (3) und schließlich in analoge Audioinformationen umgewandelten Audiosignale, können zusammen mit dem abgeleiteten AES/EBU-Timecodesignal auf einem DAT-Recorder aufgezeichnet und später in Echtzeit synchron zum Timecode der parallelen Filmbilder wiedergegeben werden.

Die erfindungsgemäße Vorrichtung besteht aus handelsüblichen Komponenten. Als Zeilenkamera 11 kann eine CCD-Kamera der Firma DALSA mit der Typenbezeichnung CL-C3 512 A eingesetzt werden, die ein digitales Videosignal über eine RS-422-Schnittstelle abgibt.

Die Datenverarbeitungseinrichtung 13 kann ein Pentium-PC mit MMX-Prozessor sein, welcher mit einer Frame-Grabber-Karte IC-PCI der Firma Imaging Technology bestückt ist, auf der ein Acquisition Modul AM-DIG für die Verarbeitung digitaler Kamerasignale installiert ist. Für die audio-visuelle Kontrolle der Lichttonspuren 3 kann in dem Pentium-PC eine Grafikkarte „ATI Mach 64VT2" und eine Soundkarte „Terratec Soundsystem Base 1" vorgesehen sein. Zur Speicherung der Bilddaten der Lichttonspuren 3 kann eine schnelle 4 GByte große Festplatte eingesetzt werden. Die Steuerung des Pentium-PC's kann ein Betriebssystem von Microsoft übernehmen; die Umwandlung der restaurierten Bilddaten der WAV-Datei in analoge Audiosignale kann mit dem Programm WaveLab 2.0 erfolgen. Die Anwendungsprogramme zur Korrektur der FPN- und Shading-Fehler sowie zur Ermittelung von Schwellwertpegeln nach Maßgabe der zuvor beschriebenen Algorithmen sind in der Programmiersprache C++ geschrieben.

**Patentansprüche**

1. Vorrichtung zur Wiedergabe von Lichttonaufzeichnungen für einen Filmabtaster mit einer opto/elektronischen Wandlereinrichtung (1, 2', 2'', 11) zur Abtastung von auf Film (4) aufgezeichneten Lichttonspuren (3), welche an einem Ausgang (12) ein Bildsignals ausgibt,
gekennzeichnet durch

eine Einrichtung (14) zur Signalaufbereitung welche an einem Eingang das Bildsignal vom Ausgang (12) der opto/elektronische Wandlereinrichtung (1, 2', 2'', 11) empfängt und als Bilddaten zwischenspeichert,
eine Datenverarbeitungseinrichtung (16, 17) zur programmgesteuerten Verarbeitung der zwischengespeicherten Bilddaten, und
eine Einrichtung (23) zur Umwandlung verarbeiteter Bilddaten in Audiodaten für die Wiedergabe der auf den Lichttonspuren (3) aufgezeichneten Toninformationen.

2.   Vorrichtung nach Anspruch 1,
dadurch gekennzeichnet,

dass der Film (4) von einer Filmtransporteinrichtung (8 bis 10) in Längsrichtung transportierbar und im Bereich der Lichttonspuren (3) von einem Bildsensor (11), insbesondere einem CCD-Zeilensensor, quer zur Längsrichtung des Films (4) abtastbar ist.

3.   Vorrichtung nach Anspruch 1,
dadurch gekennzeichnet,

dass die Datenverarbeitungseinrichrung (13) durch ein Programm so steuerbar ist, dass die Abtastrate der opto/elektronischen Wandlereinrichtung (1, 2', 2'', 11) mit der von der Filmtransporteinrichtung (8 bis 10) bestimmten Filmtransportgeschwindigkeit zeitlich verkoppelt ist.

4.   Vorrichtung nach Anspruch 1,
dadurch gekennzeichnet,

dass die durch Abtasten der Lichttonspuren (3) erzeugten Bilddaten in einem RAW-Dateiformat in den Speicher (17) schreibbar sind,
dass die Bilddaten des RAW-Dateiformats programmgesteuert aus dem Speicher (17) lesbar und über ein Bussystem (15) einer CPU (16) zuführbar sind,
dass die CPU (16) von empfangenen Bilddaten des RAW-Dateiformats durch programmgesteuerte Bildverarbeitung ein Datensignal in einem WAV-Dateiformat ableitet und
dass von dem Datensignal des WAV-Dateiformats ein Audiosignal zur Wiedergabe der auf den Lichttonspuren (3) aufgezeichneten Toninformationen erzeugbar ist.

5.   Vorrichtung nach Anspruch 1,
dadurch gekennzeichnet,

dass die CPU (16) durch ein Programm so steuerbar ist, dass eine Fehleranalyse zur Detektion von Fehlstellen im Bereich der Lichttonspuren (3) anhand von abgeleiteten Bilddaten der Lichttonspuren (3) durchführbar ist und dass detektierte Fehlstellen fehlerverdeckbar sind.

6.   Vorrichtung nach Anspruch 1,
dadurch gekennzeichnet,

dass ein Programm zur Steuerung der CPU (16) so gestaltet ist, dass die Bilddaten in einem RAW-Dateiformat einer Filterung unterworfen werden.

7.   Vorrichtung nach Anspruch 1,
dadurch gekennzeichnet,

dass ein Mittel zur Korrektur von Fixed-Pattern-Noise-Fehlern vorgesehen ist, bei welchem die ohne Abtastung von Film (4) erzeugten Bilddaten einer bestimmte Anzahl von Zeilen zeilenweise in ein Feld geschrieben werden, dann spaltenweise aus dem Feld gelesen und einer multiplikativen Korrektur gemäß der Funktion

$$g_{neu}(x) = (g_{FPN} / g_{FPN}(x)) * g_{alt}(x)$$

unterworfen werden.

8.   Vorrichtung nach Anspruch 1,
dadurch gekennzeichnet,

dass ein Mittel zur Korrektur von Shading-Fehlern vorgesehen ist, welches von Fixed-Pattern-Noise-korrigierten Bilddaten der Lichttonspuren (3) eine Ausgleichskurve gemäß der Polynomfunktion

$$g(x) = \sum_{i=0}^{i=6} a_i \, x^i$$

erzeugt, welche die durch Abtastung der Lichttonspuren (3) erzeugten Bilddaten multiplikativ beeinflusst.

9.   Vorrichtung nach Anspruch 8,
dadurch gekennzeichnet,

dass das Mittel zur Korrektur von Shading-Fehlern ein Mittel zur seitlichen Begrenzung des Abtastbereichs der Lichttonspuren (3) aufweist.

10. Vorrichtung nach Anspruch 1,

dadurch gekennzeichnet,

dass die CPU (16) durch ein Programm so steuerbar ist, dass Fehler in Bilddaten von Lichttonspuren (3), die in einer Sprossenschrift aufgezeichnet sind, nach einem Grauwerthistogramm detektierbar sind.

11. Vorrichtung nach einem der vorhergehenden Ansprüche,
dadurch gekennzeichnet,

dass ein Mittel zur Erzeugung eines Timecode-Signals vorgesehen ist, welches von RAW-Daten und/oder WAV-Daten und/oder Daten der Filmtransporteinrichtung des Filmabtasters ableitet.

12. Vorrichtung nach Anspruch 1,
dadurch gekennzeichnet,

dass die Position der opto/elektronische Wandlereinrichtung (1, 2', 2'', 11) zur Abtastung der Lichttonspuren (3) unabhängig von der Position einer opto/elektronische Wandlereinrichtung (1, 2', 2'', 11) zur Abtastung von Filmbildfenstern einstellbar ist.

13. Vorrichtung nach Anspruch 1 und 2,
dadurch gekennzeichnet,

dass zur Positionierung und/oder Fokussierung des Bildsensors (11) ein vom Bildsensor (11) erzeugtes Bildsignal einer Bildwiedergabevorrichtung (22) zugeführt ist.

14. Vorrichtung nach Anspruch 1,
dadurch gekennzeichnet,

dass die opto/elektronische Wandlereinrichtung (1, 2', 2'', 11) eine Vorrichtung zur diffusen Beleuchtung des Films (4) aufweist.

15. Vorrichtung nach Anspruch 1,
dadurch gekennzeichnet,

dass die opto/elektronische Wandlereinrichtung (1, 2', 2'', 11) eine Vorrichtung zur Nassabtastung des Films (4) aufweist.

16. Verfahren zur Wiedergabe von Lichttonaufzeichnungen, bei welchem auf einem Film (4) optisch aufgezeichnete Lichttonspuren (3) in ein elektrisches Signal umwandelt werden,
dadurch gekennzeichnet,

dass von dem elektrischen Signal Bilddaten abgeleitet werden,

dass die Bilddaten zwischenspeichert werden,
dass die zwischengespeicherten Bilddaten einer programmgesteuerten Bildverarbeitung unterworfen werden und
dass durch die Bildverarbeitung erhaltene Bilddaten in Audiodaten für eine Wiedergabe umgewandelt werden.

17. Verfahren nach Anspruch 16,
dadurch gekennzeichnet,

dass die Bilddaten der abgetasteten durch Daten bestimmter Grauwerte interaktiv korrigiert und/oder ergänzt werden.

18. Verfahren nach Anspruch 16,
dadurch gekennzeichnet,

dass beim Vorliegen von Lichttonspuren (3) in Sprossenschrift ein Rauschanteil des Filmkorns durch eine Fast-Fourier-Analyse der Bilddaten in Zeilenrichtung gemessen wird, und
dass der gemessene Rauschanteil im Sinne einer Rauschreduzierung mit den Bilddaten in Spaltenrichtung multipliziert wird.

19. Verfahren nach Anspruch 16,
dadurch gekennzeichnet,

dass die Bilddaten der abgetasteten Lichttonspuren (3) in folgender Reihenfolge einer Bildverarbeitung unterworfen werden:

g) Durchführung einer Fixed-Pattern-Noise-Korrektur,
h) Durchführung einer globalen Vorfilterung, insbesondere einer planaren Tiefpassfilterung,
i) Abtrennen von Bilddaten an Randbereichen der Lichttonspuren (3),
j) Korrektur von Shading-Fehlern,
k) Durchführung einer lokalen Fehlerbehandlung und
l) Durchführung einer globalen Nachfilterung.

20. Verfahren nach Anspruch 16,
dadurch gekennzeichnet,

dass Werte von fehlerhaften Bilddaten der Lichttonspuren (3) durch Mittelwerte von örtlich und/oder zeitlich benachbarten fehlerfreien Bilddaten ersetzt werden.

21. Verfahren nach Anspruch 16,
dadurch gekennzeichnet,

dass die Werte mehrerer, in Zeilenrichtung aufeinanderfolgender fehlerhafter Bilddaten durch einen Mittelwert ersetzt werden, welcher dem mittleren Grauwert aufeinander folgender Zeilen entspricht.

FIG. 1

FIG. 2

FIG.3

FIXED PATTERN NOISE LINE

FIG. 4

FIG. 5